# EUROPEAN PATENT APPLICATION

(11) **EP 3 581 372 A2**
(43) Date of publication of application: **18.12.2019**
(21) Application number: 19167253.4
(22) Date of filing: 04.04.2019
(51) Int. Cl.: B29D 11/00, G02B 5/09, B29C 45/14

(54) **POLYGONAL MIRROR, DEFLECTOR, OPTICAL SCANNING APPARATUS, IMAGE FORMING APPARATUS, AND MANUFACTURING METHOD OF THE POLYGONAL MIRROR**

(30) Priority: 24.04.2018 JP 2018082892
(71) Applicant: CANON KABUSHIKI KAISHA, Ohta-ku Tokyo 146-8501 (JP)
(72) Inventor: OHTA, Mitsuhiro, Tokyo, 146-8501 (JP); TAKATA, Atsushi, Tokyo, 146-8501 (JP); TANAKA, Yoshihiko, Tokyo, 146-8501 (JP); TANAKA, Takatoshi, Tokyo, 146-8501 (JP); YAMAYA, Fumihiko, Tokyo, 146-8501 (JP); MATSUSHITA, Naoki, Tokyo, 146-8501 (JP); KATAYAMA, Hiroki, Tokyo, 146-8501 (JP)
(74) Representative: TBK

(57) **Abstract**

A polygonal mirror includes a reflecting surface capable of reflecting laser light emitted from a light source, a base material made of a metal material, and a molded member molded outside the base material and including a first surface and a second surface which crosses the first surface and which corresponds to the reflecting surface.

## Description

### FIELD OF THE INVENTION AND RELATED ART

The present invention relates to a polygonal mirror for scanning an image bearing member with laser light, a deflector including the polygonal mirror, an optical scanning apparatus including the deflector, an image forming apparatus including the optical scanning apparatus, and a manufacturing method of the polygonal mirror.

In a conventional optical scanning apparatus used in an image forming apparatus such as a laser printer, as disclosed in Japanese Laid-Open Patent Application (JP-A) 2005-172930, laser light emitted from a light source is optically modulated depending on an image signal, and the modulated laser light is deflected by a deflector comprising, for example, a polygonal mirror and then a photosensitive drum is scanned with the deflected laser light, so that an image is formed on the photosensitive drum by a scanning lens such as an fθ lens and thus an electrostatic latent image is formed on the photosensitive drum. Then, the electrostatic latent image on the photosensitive drum is visualized (developed) into a toner image by a developing device, and the toner image is transferred onto a recording material such as recording paper and is sent to a fixing device, and then the toner image (toner) on the recording material is heat-fixed on the recording material, so that printing is carried out.

Conventionally, a scanner motor which is the deflector used in the optical scanning apparatus is constituted by the polygonal mirror, a rotor, a rotation shaft provided integrally with the rotor, a seat (base) for mounting the polygonal mirror, a bearing sleeve provided integrally with a substrate, a stator, and the like. Further, the polygonal mirror is provided with a bearing surface contacting the seat when the polygonal mirror is mounted on the seat.

Such a polygonal mirror is required to have a high dimensional accuracy. For that reason, the polygonal mirror is prepared by mechanically processing metal such as aluminum in a predetermined shape in general by a precise processing machine such as a precision lathe, so that many steps and a large number of man-hours are required for manufacturing the polygonal mirror and thus the resultant polygonal mirror was expensive in some instances.

Therefore, as in JP-A Hei 6-110002, a proposal for realizing an inexpensive polygonal mirror while suppressing the manufacturing steps and the number of manufacturing man-hours by injection molding a resin material into the polygonal mirror has been made.

However, in JP-A Hei 6-110002, with recent speed-up of the image forming apparatus, there is a possibility that the polygonal mirror made of the resin material is deformed by centrifugal force with high-speed rotation of the scanner motor and a temperature rise at a periphery of the scanner motor. When the polygonal mirror is deformed, there is a possibility that an image defect due to a deviation of an irradiation position of the laser light occurs.

### SUMMARY OF THE INVENTION

A principal object of the present invention is to reduce a degree of deformation of a polygonal mirror with high-speed rotation and an ambient temperature rise.

According to an aspect of the present invention, there is provided a polygonal mirror comprising: a reflecting surface capable of reflecting laser light emitted from a light source; a base material made of a metal material; and a molded member molded outside the base material and including a first surface and a second surface which crosses the first surface and which corresponds to the reflecting surface.

Further features of the present invention will become apparent from the following description of exemplary embodiments with reference to the attached drawings.

### BRIEF DESCRIPTION OF THE DRAWINGS

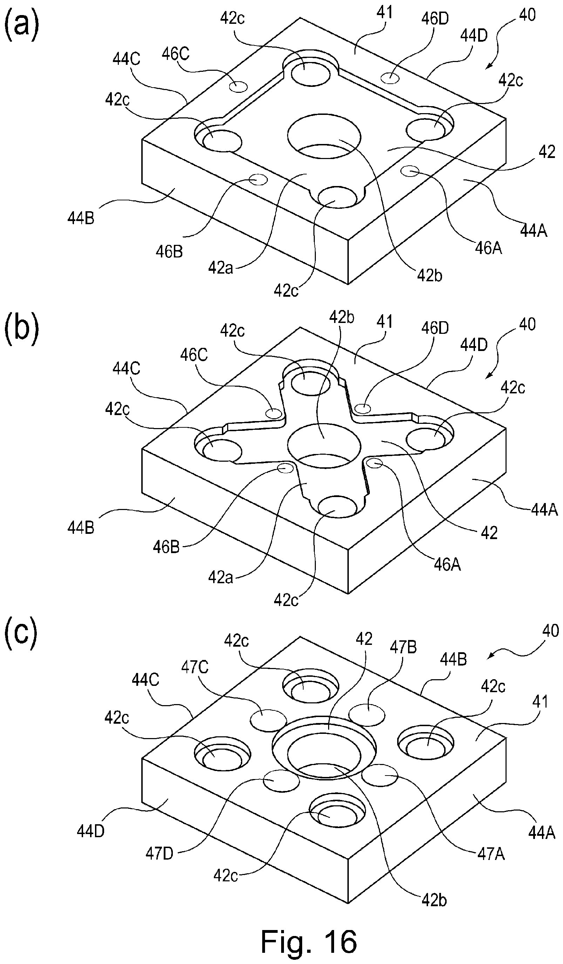

Figure 1 is a schematic sectional view of an image forming apparatus.
Figure 2 is a top (plan) perspective view of an optical scanning apparatus.
Figure 3 is a schematic sectional view of a scanner motor.
Figure 4 is a top perspective view of a polygonal mirror according to Embodiment 1.
Figure 5 is a schematic sectional view of the polygonal mirror according to Embodiment 1.
Figure 6 is a schematic sectional view of a manufacturing method for manufacturing the polygonal mirror according to Embodiment 1.
Figure 7 is a schematic sectional view of the polygonal mirror according to Embodiment 1 and the manufacturing method for manufacturing the polygonal mirror.
Figure 8 is a schematic sectional view of the polygonal mirror according to Embodiment 1 and the manufacturing method for manufacturing the polygonal mirror.
Figure 9 is a graph showing a relationship between number of revolutions of the polygonal mirror according to Embodiment 1 and a deformation amount of a reflecting surface.
Figure 10 is a graph showing a relationship between the number of revolutions of the polygonal mirror according to Embodiment 1 and a deformation amount of the reflecting surface.
Figure 11 is a top perspective view of a polygonal mirror according to Embodiment 2.
Figure 12 is a schematic sectional view of the polygonal mirror according to Embodiment 2.
Figure 13 is a schematic sectional view of a manufacturing method for manufacturing the polygonal mirror according to Embodiment 2.
Figure 14 is a schematic sectional view of the polygonal mirror according to Embodiment 1 and the manufacturing method for manufacturing the polygonal mirror.
Figure 15 is a schematic sectional view of the polygonal mirror according to Embodiment 2 and the manufacturing method for manufacturing the polygonal mirror.
Parts (a) and (b) of Figure 16 are perspective views of polygonal mirrors according to other embodiments as seen from top surface sides of the polygonal mirrors, and part (c) of Figure 16 is a perspective view of a polygonal mirror according to another embodiment as seen from a bottom (surface) side of the polygonal mirror.

### DESCRIPTION OF EMBODIMENTS

Embodiments of the present invention will be specifically described with reference to the drawings. Dimensions, materials, shapes and relative arrangements of constituent elements described in the following embodiments should be appropriately be changed depending on structures and various conditions of devices (apparatuses) to which the present invention is applied. Accordingly, the scope of the present invention is not intended to be limited to the following embodiments unless otherwise specified.

### [Embodiment 1]

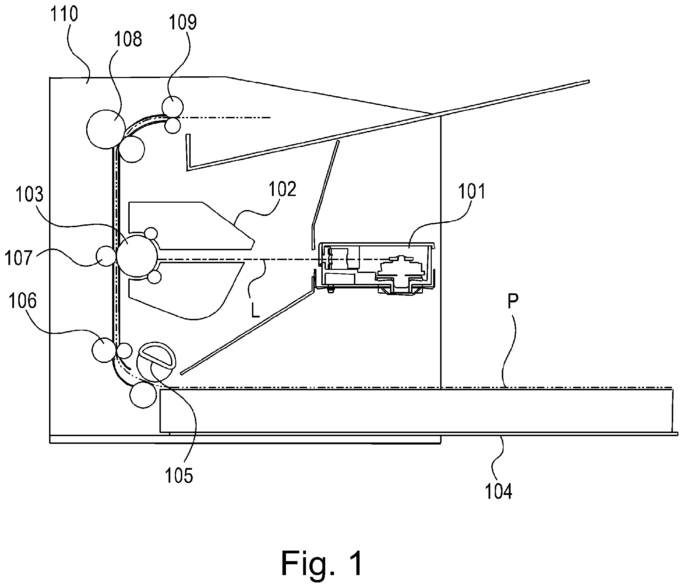

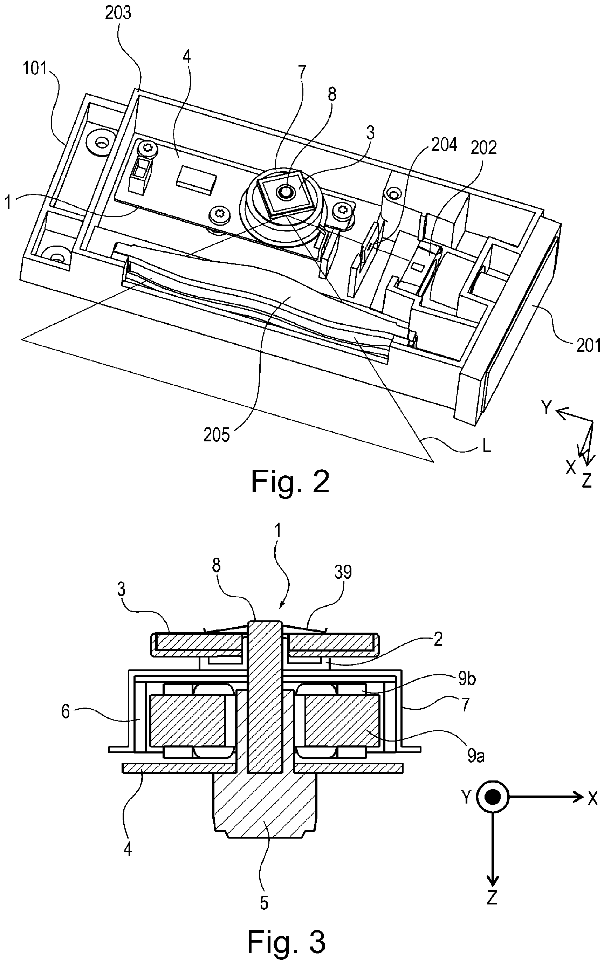

With reference to Figures 1 and 2, an image forming apparatus including an optical scanning apparatus according to this embodiment will be described. In the following description, first, the image forming apparatus including the optical scanning apparatus will be described as an example, and then the optical scanning apparatus in the image forming apparatus will be described. Then, a scanner motor which is a deflector, and a polygonal mirror which are assembled in the optical scanning apparatus will be described. Then, a metal mold used for molding the polygonal mirror and a manufacturing method of the polygonal mirror using the metal mold will be described.

First, an image forming apparatus 110 according to Embodiment 1 will be described using Figure 1. Figure 1 is a schematic sectional view of the image forming apparatus 110 including an optical scanning apparatus 101 according to Embodiment 1. The image forming apparatus 110 according to this embodiment includes the optical scanning apparatus 101 and is an image forming apparatus such that a photosensitive drum 103 is scanned with laser light L by the optical scanning apparatus 101 and then an image is formed on a recording material P such as recording paper on a basis of a latent image formed by scanning. In this embodiment, description will be made using a printer as an example of the image forming apparatus.

In the image forming apparatus 110, the laser light L based on image information is emitted by the optical scanning apparatus 101 as an exposure means, and a surface of the photosensitive drum 103 as an image bearing member incorporated in a process cartridge 102 is irradiated with the laser light L. Then, the latent image is formed on the photosensitive drum 103, and is visualized (developed) as a toner image with toner as a developer by the process cartridge 102. Incidentally, the process cartridge 102 integrally includes the photosensitive drum 103 and a charging means, a developing means and the like as process means actable on the photosensitive drum 103 and is mountable in and dismountable from the image forming apparatus 110.

On the other hand, recording materials P stacked on a recording material stacking plate 104 are fed while being separated one by one by a feeding roller 105 and is further fed toward a downstream side by an intermediary roller pair 106. Onto the fed recording material P, the toner image formed on the photosensitive drum 103 is transferred by a transfer roller 107. The recording material P on which an unfixed toner image is formed is fed toward a further downstream side, and then the toner image is fixed on the recording material P by a fixing device 108 including a heating member therein. Thereafter, the recording material P is discharged to an outside of the image forming apparatus 110 by a discharging roller pair 109.

Incidentally, in this embodiment, the charging means and the developing means which are used as the process means actable on the photosensitive drum 103 are integrally assembled with the photosensitive drum 103 in the process cartridge 102, but the process means may also be constituted as separate members from the photosensitive drum 103.

Next, the optical scanning apparatus 101 in the image forming apparatus 110 will be described using Figure 2. Figure 2 is a schematic perspective view showing a structure of the optical scanning apparatus 101 according to Embodiment 1.

The laser light L emitted from a light source device 201 as a light source is focused in a sub-scan direction by a cylindrical lens 202 and is limited to a predetermined beam diameter by an optical aperture stop 204 formed in a casing 203. The laser light L is deflected by a polygonal mirror 3 rotationally driven about Z-axis by a scanner motor 1 which is a deflector and passes through an fθ lens 205, and thereafter is focused on an unshown image bearing member. The image bearing member is scanned with the laser light L in a Y-axis direction, so that an electrostatic latent image is formed. In Figure 2, a direction perpendicular to a YX-flat plane comprising the Z-axis and a Y-axis perpendicular to the Z-axis is an X-axis direction. Incidentally, the light source device 201, the cylindrical lens 202, the scanner motor 1 and the like are accommodated in the casing 203, and an opening of the casing 203 is closed (covered) by an optical cap (not shown) made of a resin material or metal.

Next, the scanner motor 1 which is the deflector in the optical scanning apparatus will be described using Figure 3. Figure 3 is a schematic sectional view including a rotation center of the scanner motor 1.

The scanner motor 1 is constituted by the polygonal mirror 3, a rotor 7, a rotation shaft 8, a seat 2 for mounting the polygonal mirror 3, a substrate 4, a bearing sleeve 5 provided integrally with the substrate 4, a stator, and the like. The polygonal mirror 3 deflects the laser light (light flux (beam)) L emitted from the light source device 201, so that the photosensitive drum surface is scanned with the laser light L. The bearing sleeve 5 is supported by the substrate 4 constituted by a metal plate. The rotor 7 includes a rotor magnet 6. The rotation shaft 8 is provided integrally with the rotor 7. The seat 2 is used for mounting the rotation shaft 8 and the polygonal mirror 3. The stator is constituted by a stator core 9a fixed to the substrate 4 and a stator coil 9b fixed to the stator core 9a.

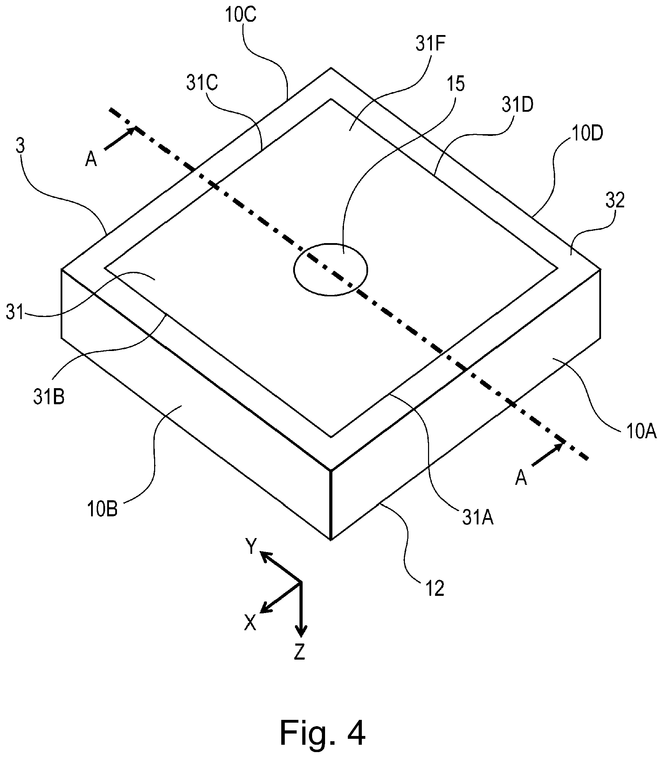

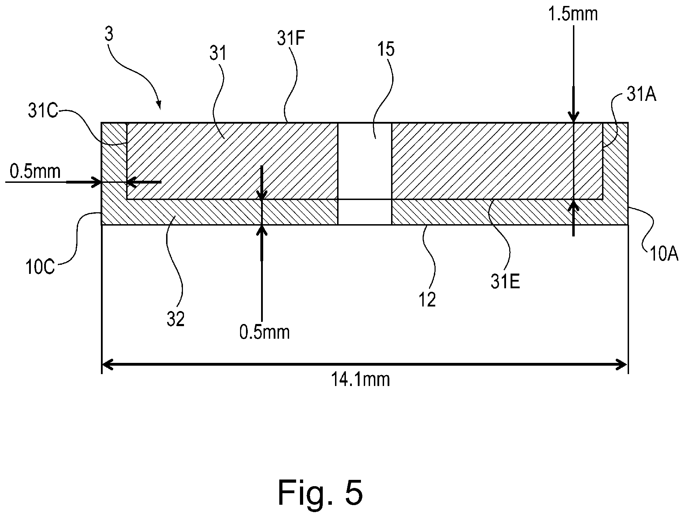

Next, the polygonal mirror 3 will be described using Figures 4 and 5. Figure 4 is a top perspective view of the polygonal mirror 3 according to Embodiment 1. Figure 5 is a schematic sectional view of the polygonal mirror 3 as seen from an arrow A direction of Figure 4. An arrow Z direction shown in Figure 4 is an axial direction (axis direction) of the rotation shaft 8 shown in Figure 2. An arrow X direction is a direction perpendicular to the arrow Z direction, and an arrow Y direction is a direction perpendicular to the arrow Z direction and the arrow X direction. Also in other figures, a relationship among the arrow X direction, the arrow Y direction and the arrow Z direction is the same.

The above-described polygonal mirror 3 includes a plurality of reflecting surfaces for reflecting the laser light (light flux) L emitted from the light source device 201. In this embodiment, the polygonal mirror 3 is illustrated as an example having a constitution including four reflecting surfaces 10A, 10B, 10C and 10D, but the present invention is not limited thereto. The polygonal mirror 3 is constituted by at least two kinds of materials of a regular prism 31 as a base material made of a metal material such as a metal plate and a molded member 32 as a molded member provided outside the regular prism 31 and made of a resin material such as a plastic material constituting a base material of the above-described reflecting surfaces. That is, the polygonal mirror 3 includes the molded member molded with the resin material outside the base material made of the metal material. In this embodiment, the regular prism 31 which is the base material is made of the metal material such as aluminum, iron, stainless steel, a steel plate or the like, and the molded member 32 as the molded member is made of the resin material such as cycloolefin resin, polycarbonate resin, acrylic resin or the like.

The metal regular prism 31 includes a bottom (surface) 31E which is one surface, four side surfaces 31A, 31B, 31C and 31D which are a plurality of crossing surfaces crossing the bottom 31E, and a top surface 31F which crosses the side surfaces 31A, 31B, 31C and 31D and which is the other surface on a surface opposite from the bottom 31E.

The molded member 32 is molded so as to cover the four side surfaces 31A, 31B, 31C and 31D and the bottom 31E of the metal regular prism 31 and has a prism shape of 14.1 mm in (one) side (circumscribed circle of 20 mm in diameter). In the molded member 32, four reflecting surfaces 10A, 10B, 10C and 10D are provided at portions covering the four side surfaces 31A to 31D, respectively, of the regular prism 31, and a resin bottom 12 is provided at a portion covering the bottom 31E of the regular prism 31. That is, the molded member 32 which is the molded member includes, outside the regular prism 31 which is the base material made of the metal material, a first surface molded with the resin material and second surfaces which cross the first surface and which correspond to the reflecting surfaces. The second surfaces of the molded member 32 are the side surfaces corresponding to the reflecting surfaces, and on these side surfaces, a metal layer is provided, so that the above-described reflecting surfaces 10A, 10B, 10C and 10D for changing (reflecting) the laser light are formed. In this embodiment, the four reflecting surfaces 10A - 10D of the polygonal mirror 3 are constituted by a thin film of metal such as aluminum, copper, silver or the like, and are formed in a film by vacuum deposition, for example. Further, the polygonal mirror 3 is provided with a protective layer on the reflecting surfaces formed in the thin film of the metal. Incidentally, in this embodiment, an example of the reflecting surfaces provided by forming the metal layer on the four side surfaces of the polygonal mirror 3 is described, but the present invention is not limited thereto. The side surfaces (flat surfaces) of the polygonal mirror molded with the resin material may also be the reflecting surfaces. Thus, the molded member 32 is provided with the resin bottom 12 as the first surface outside the bottom 31E of the regular prism 31 and provided with the reflecting surfaces 10A - 10D as the second surfaces outside the side surfaces 31A - 31D of the regular prism 31. Incidentally, in this embodiment, the prism-shaped molded member 32 having the four reflecting surfaces is illustrated as an example, but the number and shape of the reflecting surfaces should be appropriately set and are not limited thereto.

In the polygonal mirror 3 according to this embodiment, Young's modulus of the regular prism 31 which is the base material is set so as to be higher than Young's modulus of the molded member 32 which is the molded member. Further, as described above, the regular prism 31 which is the base material is made of the metal material such as the metal plate, and the molded member 32 which is the molded member is made of the resin material such a the plastic material. In this embodiment, the material of the regular prism 31 is the steel plate, and the regular prism 31 is 205 GPa in Young's modulus and is 1.5 mm in thickness. A thickness of the regular prism 31 from the bottom 31E and the top surface 31F may suitably be in a range from 1.0 mm to 2.0 mm. On the other hand, the material of the molded member 32 is a cycloolefin polymer, and the molded member 32 is 2.84 GPa in Young's modulus and is 0.5 mm in thickness. Further, the polygonal mirror 3 is provided with a through hole 15 penetrating through the top surface 31F of the regular prism 31 and the resin bottom 12 of the molded member 32. In the through hole 15, the polygonal mirror seat 2 is engaged, so that a position of the polygonal mirror 3 in an XY-flat plane (Figure 3) is determined. Further, the resin bottom 12 as a reference surface is contacted to the polygonal mirror seat 2, so that a position of the polygonal mirror 3 with respect to the Z-axis direction (Figure 3) is determined. Then, the polygonal mirror 3 is fixed to the polygonal mirror seat 2 by a fixing means such as leaf springs 39, for example. Incidentally, as the thickness of the molded member (resin member) 32 from the outside surface of the regular prism 31 to the outside surface of the molded member 32, 0.5 mm was described as an example, but the thickness of the molded member 32 may suitably be in a range from 0.1 mm to 2.0 mm.

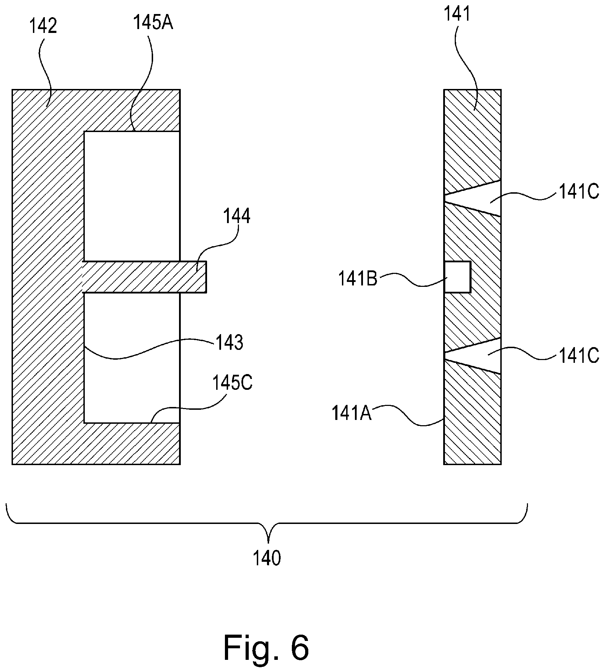

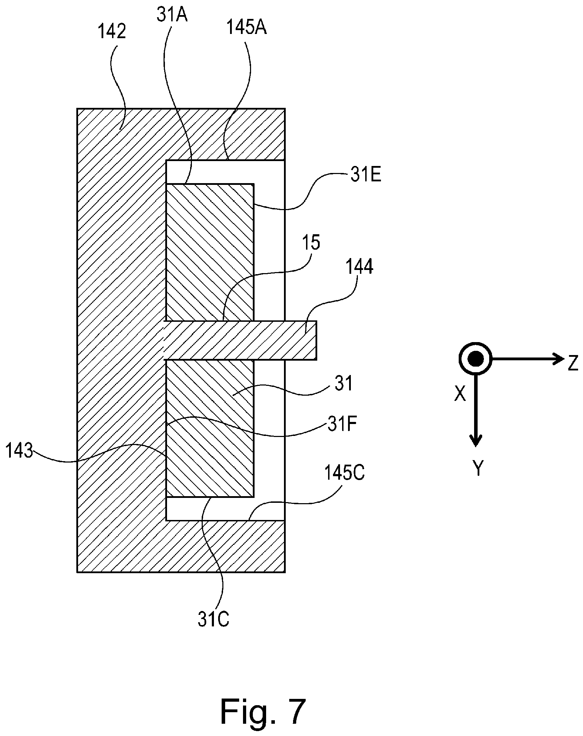

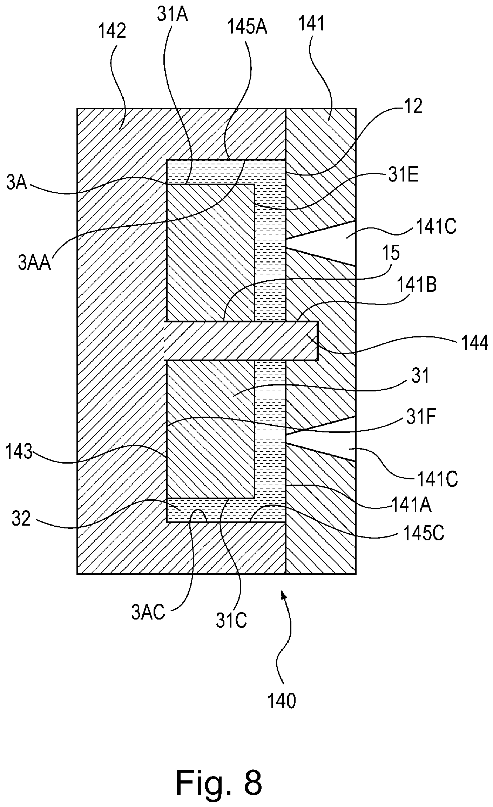

Next, the manufacturing method of the polygonal mirror 3 will be described using Figures 6 - 8. Figure 6 is a schematic sectional view of a metal mold 140 for manufacturing the polygonal mirror 3. Figure 7 is a schematic sectional view of the metal mold 140 when the regular prism 31 is mounted in the metal mold 140. Figure 8 is a schematic sectional view of the metal mold 140 during injection molding of the molded member 32 in the metal mold 140.

The manufacturing method of the polygonal mirror 3 according to this embodiment is a method of manufacturing the polygonal mirror 3 by using the metal mold 140 including a first metal mold 141 as a first mold and a second metal mold 142 as a second mold.

The second metal mold 142 includes a contact surface 143 contacting the top surface 31F which is the other surface of the regular prism 31 on the side opposite from the bottom 31E of the regular prism 31. Further, the second metal mold 142 includes a metal shaft 144 projected from the contact surface 143 and engaging in the through hole 15 of the regular prism 31. Further, the second metal mold 142 includes a plurality of second molding surfaces 145A - 145D for molding the plurality of reflecting surfaces 10A - 10D crossing the resin bottom 12 of the molded member 32 outside the regular prism 31. Incidentally, Figures 6 - 8 are the schematic sectional views, and therefore, of the four second molding surfaces 145A - 145D of the second metal mold 142, the second molding surfaces 145A and 145C are illustrated, but the second molding surfaces 145B and 145D are not illustrated.

The first metal mold 141 includes a first molding surface 141A for molding the resin bottom (reference surface) 12 which is a first surface of the molded member 32 outside the bottom 31E which is the one surface of the regular prism 31. That is, the first metal mold 141 includes the first molding surface 141A corresponding to the resin bottom 12 of the molded member 32. The first metal mold 141 includes gates 141C for permitting injection of a resin material into a molding space of the molded member 32 and a metal mold hole 141B engaging with the metal mold shaft 144 of the second metal mold 142. The gates 141C are provided so as to sandwich the metal mold hole 141B.

Such a metal mold 140 including the first metal mold 141 and the second metal mold 142 is prepared, and the metal plate is placed in the metal mold. A step of forming a resin layer outside the metal plate by injecting the resin material into the metal mold is performed, so that the polygonal mirror 3 is manufactured. This manufacturing method will be specifically described below. First, as shown in Figure 7, the regular prism 31 is inserted into the second metal mold 142 by engaging the metal mold shaft 144 in the through hole 15 of the regular prism 31. Then, in a state in which the regular prism 31 is positioned about the Z-axis by a jig (not shown), the top surface 31F is contacted to the contact surface 143 of the second metal mold 142 and thereafter the regular prism 31 is fixed to the second metal mold 142 by vacuum deposition or the like.

Next, as shown in Figure 8, the first metal mold 141 and the second metal mold 142 are closed by engaging the metal mold shaft 144 in the metal mold hole 141B, so that the molding space which is a space for permitting injection of the resin material therein is formed outside the bottom 31E of the regular prism 31 and the four reflecting surfaces 10A - 10D which are fixed to the second metal mold 142. Then, the resin material is injected into the molding space through the gates 141C of the first metal mold 141, so that the molded member 32 made of the resin material is formed outside the bottom 31E of the regular prism 31 and the fourth reflecting surfaces 10A - 10D by injection molding. After the molding, a molded product 3A including the regular prism 31 made of the metal material and the molded member 32 made of the resin material outside the regular prism 31 is taken out of the metal mold 140.

Thereafter, on molded product side surfaces 3AA to 3AD (which is not shown) as second surfaces of the molded product 3A, a metal layer is provided. Specifically, the four molded product side surfaces 3AA to 3AD (which is not shown) of the molded product 3A is subjected to a vapor deposition process of a thin film (reflected film) of metal such as aluminum, copper or silver, so that the four reflecting surfaces 10A to 10D (Figure 4) are formed. Further, a protective layer is formed on the reflecting surfaces (metal layer) formed in the thin film of the metal. Thus, the polygonal mirror 3 provided with the plurality of reflecting surfaces is manufactured. Incidentally, in this embodiment, a constitution in which the plurality of reflecting surfaces are formed by providing the thin film of the metal on the plurality of molded product side surfaces of the molded product is described as an example, but the present invention is not limited thereto. For example, it is also possible to employ a constitution in which the molded product side surfaces of the molded product are used as the reflecting surfaces as they are.

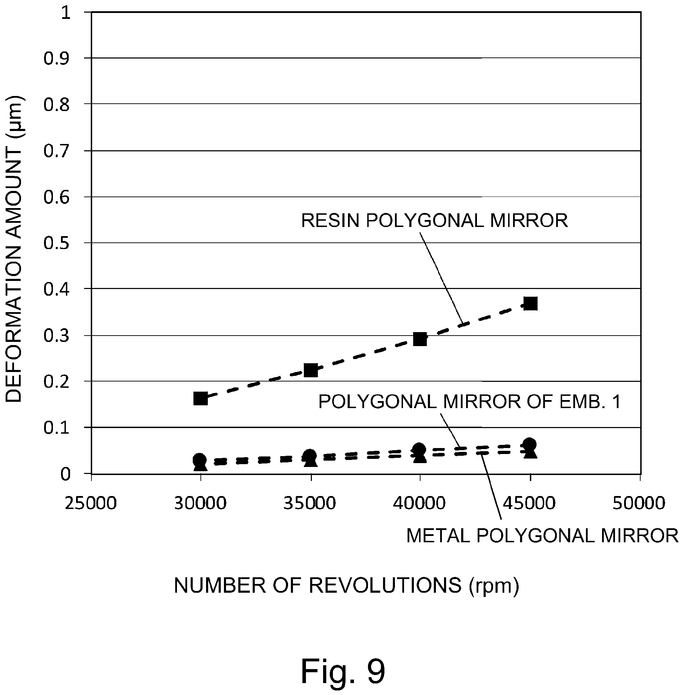

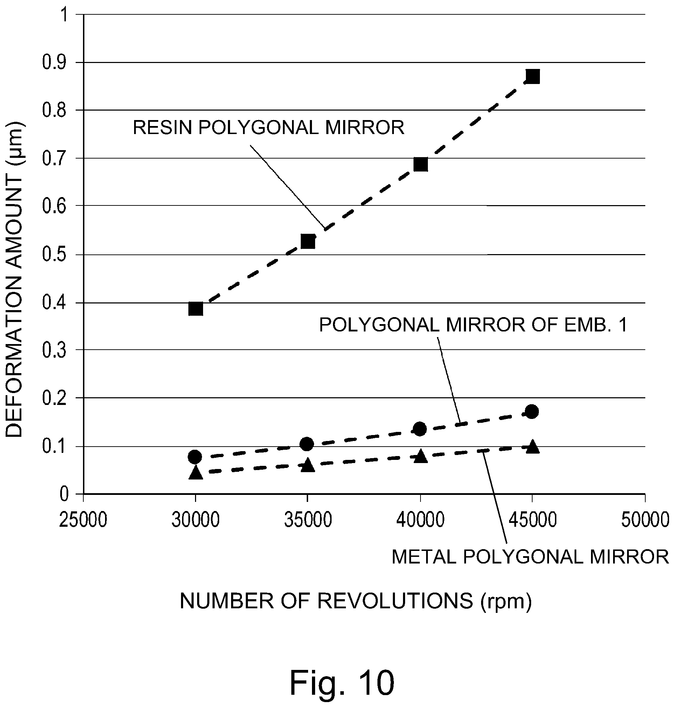

Next, a relationship between the number of revolutions and a deformation amount of the reflecting surface of the polygonal mirror 3 during drive of the polygonal mirror 3 will be described using Figures 9 and 10. Figure 9 is a graph showing a relationship between the deformation amount of the reflecting surface at a central portion with respect to a longitudinal direction (X-axis direction or Y-axis direction) of Figure 4 and the number of revolutions of the polygonal mirror 3 when the polygonal mirror is rotationally driven. Figure 10 is a graph showing a relationship between the deformation amount of the reflecting surface at an end portion with respect to the longitudinal direction (X-axis direction or Y-axis direction) of Figure 4 and the number of revolutions of the polygonal mirror 3 when the polygonal mirror is rotationally driven. In each of Figures 9 and 10, the relationship between the number of revolutions and the deformation amount for each of the polygonal mirror 3 according to this embodiment (Embodiment 1), a polygonal mirror in Comparison Example 1 in which the polygonal mirror is prepared by machining of a metal material, and a polygonal mirror in Comparison Example 2 in which the polygonal mirror is prepared by injection molding with only the same resin material.

As shown in Figures 9 and 10, as regards each of the three polygonal mirrors, the deformation amount of the reflecting surface increases with an increasing number of revolutions of the polygonal mirror. Further, as regards the deformation amount of the reflecting surface of the polygonal mirror, it is understood that the polygonal mirror 3 according to this embodiment is smaller in deformation amount than the polygonal mirror made of only the resin material in Comparison Example 2 and that the deformation amount for the polygonal mirror 3 according to this embodiment is close to the deformation amount for the polygonal mirror in Comparison Example 1 in which the polygonal mirror is prepared by machining of the metal material.

According to this embodiment, by employing a constitution of the polygonal mirror 3 in which the molded member made of the resin material is provided outside the base material made of the metal material, the following effects can be achieved.

In the polygonal mirror 3 according to this embodiment, the molded member 32 molded with the metal mold 140 is provided with the four reflecting surfaces 10A - 10D and the resin bottom 12 which are formed outside the regular prism 31 as the base material made of the metal material. As a result, compared with the polygonal mirror which is prepared by machining the metal material such as aluminum by a precise processing machine as in JP-A 2005-172930, the steps and the number of man-hours of the manufacturing can be suppressed, so that an inexpensive polygonal mirror 3 can be realized. In addition, by providing the regular prism 31 higher in Young's modulus than the molded member 32 inside the molded member 32, rigidity can be improved compared with the polygonal mirror manufactured by injection molding with the same resin member as in JP-A Hei 6-110002. Therefore, a degree of deformation of the polygonal mirror 3 due to the speed-up (increase in number of revolutions) of the scanner motor 1 and the temperature rise at the periphery of the scanner motor 1, and the like can be minimized, so that an image defect due to a deviation of an irradiation position of the laser light can be improved.

### [Embodiment 2]

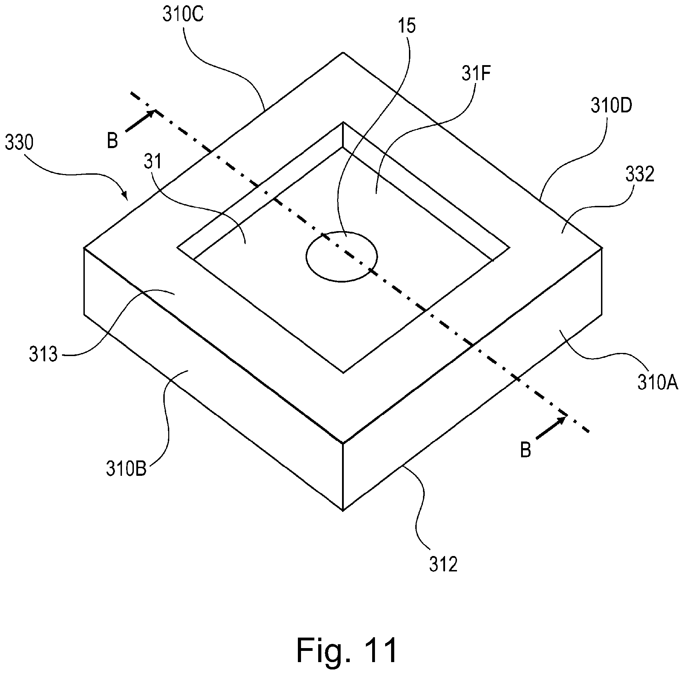

With reference to Figures 11 to 15, a polygonal mirror and a manufacturing method of the polygonal mirror which are according to Embodiment 2 will be described. Incidentally, a deflector including the polygonal mirror, an optical scanning apparatus including the deflector and an image forming apparatus including the optical scanning apparatus are similar to those in Embodiment 1 described above and the therefore will be omitted from description in this embodiment. In the following description, first, the polygonal mirror will be described and subsequently, a metal mold used for molding the polygonal mirror and a manufacturing method of the polygonal mirror using the metal mold will be described.

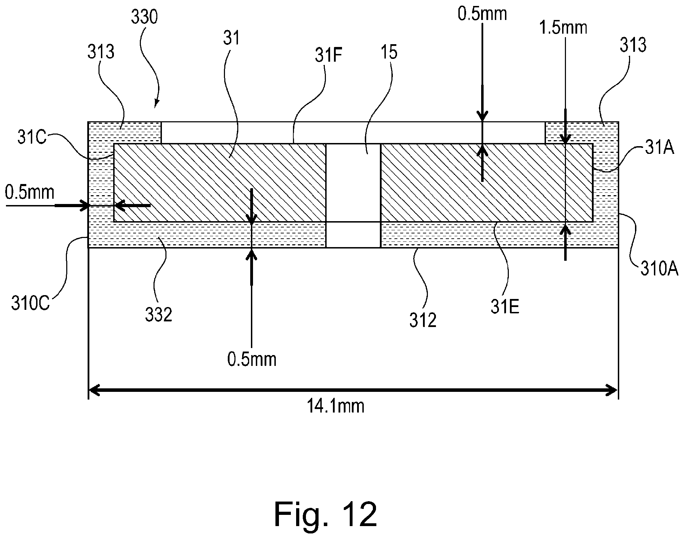

Figure 11 is a top perspective view of a polygonal mirror 330 in this embodiment. Figure 12 is a schematic sectional view of the polygonal mirror 330 as seen from an arrow B direction of Figure 11. The polygonal mirror 330 in this embodiment will be described using Figures 11 and 12. Incidentally, component parts which are the same as those in the above-described Embodiment 1 are represented by the same reference numerals or symbols and will be omitted from description.

The polygonal mirror 330 according to this embodiment is constituted, similarly as in Embodiment 1, by at least two kinds of materials of a regular prism 31 as a base material made of a metal material and a molded member 332 as a molded member provided outside the regular prism 31 and made of a resin material.

The regular prism 31 of the polygonal mirror 330 is similar to the regular prism 31 of Embodiment 1, and therefore will be omitted from description.

The molded member 332 of the polygonal mirror 330 is molded so as to cover the four side surfaces 31A, 31B, 31C and 31D, the bottom 31E and a part of the top surface 31F of the regular prism 31 such as the metal plate and has a prism shape of 14.1 mm in (one) side (circumscribed circle of 20 mm in diameter). In the molded member 332, four reflecting surfaces 310A, 310B, 310C and 310D are provided at portions covering the four side surfaces 31A to 31D, respectively, of the regular prism 31, and a resin bottom 312 is provided at a portion covering the bottom 31E of the regular prism 31. Further, in the molded member 332, 0.5 mm-thick resin top surface 313 is provided at a portion covering the part of the top surface 31F, which is the other surface of the regular prism 31, on a side opposite from the bottom 31E of the regular prism 31.

That is, the molded member 332 is provided with the resin bottom 312 as the first surface outside the bottom 31E of the regular prism 31 and provided with the reflecting surfaces 10A - 10D as the second surfaces outside the side surfaces 310A - 310D of the regular prism 31. Further, the molded member 332 is provided with the resin top surface 313 as a third surface at least at a part thereof outside the top surface 31F of the regular prism 31. Incidentally, in this embodiment, the prism-shaped molded member 32 having the four reflecting surfaces is illustrated as an example, but the number and shape of the reflecting surfaces should be appropriately set and are not limited thereto. Further, as a thickness of the above-described molded member (resin member) 332 from an outside surface of the regular prism 31 to an outside surface of the molded member 332, 0.5 mm was described as an example, but the thickness is not limited thereto and may preferably be in a range from 0.1 mm to 2.0 mm.

Incidentally, also in polygonal mirror 330 according to this embodiment, Young's modulus of the regular prism 31 which is the base material is set so as to be higher than Young's modulus of the molded member 32 which is the molded member. The material of the regular prism 31 is the steel plate, and the regular prism 31 is 205 GPa in Young's modulus and is 1.5 mm in thickness. A thickness of the regular prism 31 from the bottom 31E and the top surface 31F may suitably be in a range from 1.0 mm to 2.0 mm. On the other hand, the material of the molded member 32 is a cycloolefin polymer, and the molded member 32 is 2.84 GPa in Young's modulus and is 0.5 mm in thickness.

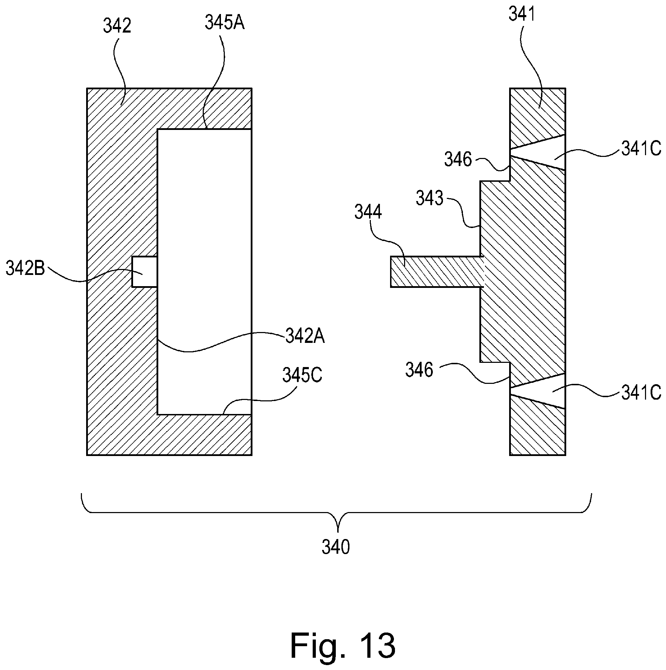

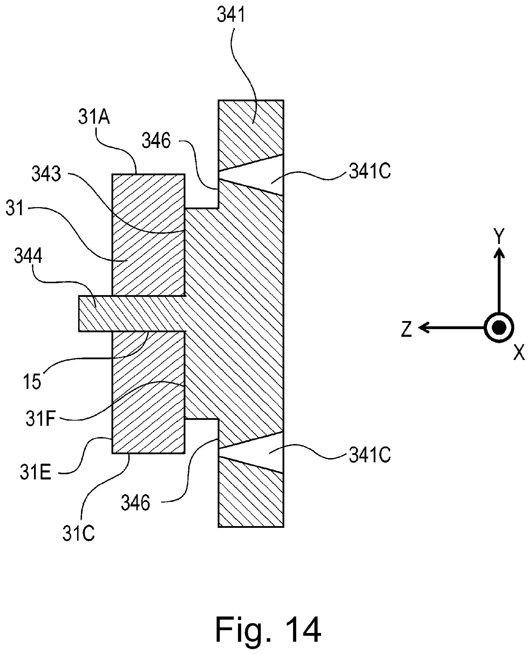

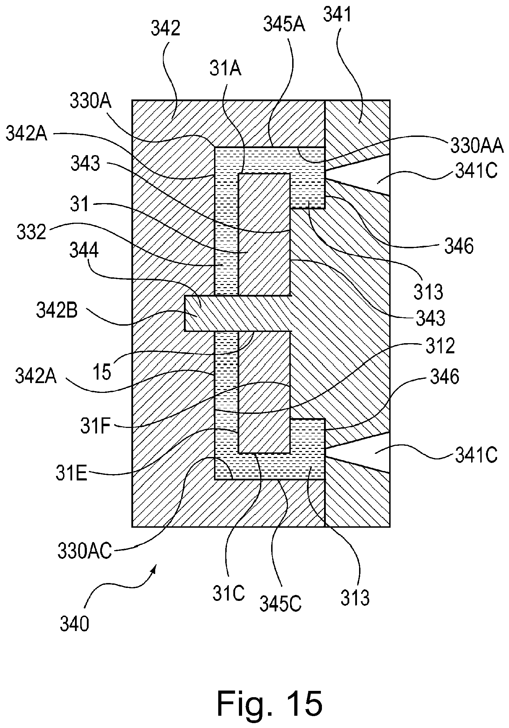

Next, the manufacturing method of the polygonal mirror 330 will be described using Figures 13 - 15. Figure 13 is a schematic sectional view of a metal mold 340 for manufacturing the polygonal mirror 330. Figure 14 is a schematic sectional view of the metal mold 340 when the regular prism 31 is mounted in the metal mold 340. Figure 15 is a schematic sectional view of the metal mold 340 during injection molding of the molded member 332 in the metal mold 340.

The manufacturing method of the polygonal mirror 330 according to this embodiment is a method of manufacturing the polygonal mirror 330 by using the metal mold 340 including a first metal mold 342 as a first mold and a second metal mold 341 as a second mold.

The first metal mold 342 includes a first molding surface 342A for molding the resin bottom (reference surface) 312 which is a first surface of the molded member 332 outside the bottom 31E which is the one surface of the regular prism 31. That is, the first metal mold 342 includes the first molding surface 342A corresponding to the resin bottom 312 of the molded member 332. The first metal mold 342 includes a plurality second molding surfaces (reflecting molding surfaces) 345A - 345D for molding a plurality of reflecting surfaces 310A - 310D crossing the resin bottom 312 of the molded member 332 outside the regular prism 31. Further, the first metal mold 342 includes a metal mold hole 342B in which a metal mold shaft 344 of the second metal mold 341 is engageable.

The second metal mold 341 includes a contact surface 343 contacting the top surface 31F which is the other surface of the regular prism 31 on the side opposite from the bottom 31E of the regular prism 31. Further, the second metal mold 341 includes a metal shaft 144 projected from the contact surface 343 and engaging in the through hole 15 of the regular prism 31. Further, the second metal mold 341 includes a third molding surface 346 for molding the resin top surface 313, which is a third surface on the side opposite from the resin bottom 312 of the molded member 332, outside the top surface 31F of the regular prism 31. In the second metal mold 341, the third molding surface 346 is provided in a region which is in non-contact with the contact surface 343, outside the top surface 31F of the regular prism 31 and is provided at a position spaced from the contact surface 343 by a distance corresponding to a thickness of the molded member 332 from the top surface 31F of the regular prism 31. As a result, in the region which is in non-contact with the contact surface 343 positioned at the part of the top surface 31F of the regular prism 31, a molding space for permitting molding of the resin top surface 313 of the molded member 332. Further, the second metal mold 341 includes gates 341C for permitting injection of a resin material into the molding space of the molded member 332 between itself and the first metal mold 342. The gates 341C are provided so as to sandwich the contact surface 343 and the metal mold shaft 344.

Such a metal mold 340 including the first metal mold 342 and the second metal mold 341 is prepared, and a step described below is performed, so that the polygonal mirror 330 is manufactured. First, as shown in Figure 14, the regular prism 31 is inserted into the second metal mold 341 by engaging the metal mold shaft 344 in the through hole 15 of the regular prism 31. Then, in a state in which the regular prism 31 is positioned about the Z-axis by a jig (not shown), the top surface 31F is contacted to the contact surface 343 of the second metal mold 341 and thereafter the regular prism 31 is fixed to the second metal mold 341 by vacuum deposition or the like.

Next, as shown in Figure 15, the second metal mold 341 and the first metal mold 342 are closed by engaging the metal mold shaft 344 in the metal mold hole 342B, so that the molding space which is a space for permitting injection of the resin material therein is formed. This molding space is formed, between the first metal mold 341 and the second metal mold 342, outside the bottom 31E of the regular prism 31, the four reflecting surfaces 10A - 10D and the top surface 31F of the regular prism 31 which are fixed to the second metal mold 341. Then, the resin material is injected into the molding space through the gates 341C of the second metal mold 341, so that the molded member 332 made of the resin material is formed outside the bottom 31E of the regular prism 31, the fourth reflecting surfaces 10A - 10D and the top surface 31F of the regular prism 31 by injection molding. After the molding, a molded product 330A including the regular prism 31 made of the metal material and the molded member 332 made of the resin material outside the regular prism 31 is taken out of the metal mold 340.

Thereafter, four molded product side surfaces 330AA to 330AD (which is not shown) of the molded product 330A is subjected to a vapor deposition process of a thin film (reflected film) of metal such as aluminum, copper or silver, so that the four reflecting surfaces 310A to 310D (Figure 11) are formed. Thus, the polygonal mirror 330 provided with the plurality of reflecting surfaces is manufactured. Incidentally, in this embodiment, a constitution in which the plurality of reflecting surfaces are formed by providing the thin film of the metal on the plurality of molded product side surfaces of the molded product is described as an example, but the present invention is not limited thereto. For example, it is also possible to employ a constitution in which the molded product side surfaces of the molded product are used as the reflecting surfaces as they are.

In this embodiment, with respect to the thickness direction, the regular prism 31 is sandwiched between the resin bottom 312 and the resin top surface 313 of the molded member 332, so that a contact area between the molded member 332 and the regular prism 31 is increased and thus adhesive strength between the molded member 32 and the regular prism 31 is enhanced. As a result, the molded member 32 and the regular prism 31 are not readily separated from each other.

### [Other embodiments]

In the above-described embodiments, as the polygonal mirror including the plurality of reflecting surfaces, a square polygonal mirror having the four reflecting surfaces was described as an example, but the present invention is not limited thereto. The polygonal mirror may appropriately be set as needed so that the shape thereof is a regular pentagon having five reflecting surfaces. Further, if the Young's modulus of the regular prism is larger than the Young's modulus of the molded member, the material of the rectangular member is not limited to the steel plate, but may also be another material such as aluminum and is not limited to the metal material. Further, also the material of the molded member is not limited to the cycloolefin polymer, but may also be another material such as polycarbonate or an acrylic resin material. Further, also the thicknesses of the regular prism and the molded member are not limited to those described above.

Further, the constitution of the polygonal mirror in which the outside of the base material made of the metal material is covered with the molded member made of the resin material is not limited to those described in the aforementioned embodiments. For example, the polygonal mirror may also employ a constitution in which the molded member made of the resin material covers entirety of the outside of the base material made of the metal material. Or, a constitution in which the molded member made of the resin material does not cover a part of the base material made of the metal material may also be employed. Specifically, such a constitution is shown in parts (a), (b) and (c) of Figure 16. Parts (a) and (b) of Figure 16 are perspective views of polygonal mirrors as seen from top surface sides, and part (c) of Figure 16 is a perspective view of a polygonal mirror as seen from a bottom side. Polygonal mirrors 40 shown in parts (a), (b) and (c) of Figure 16 are configured so that a molded member 41 made of the resin material does not cover holes 42a and 42b and a part of a top surface 42a of a base material 42. Conversely, the part of the top surface 42a is covered with the resin material. Here, the holes 42c of the base material 42 refer to four holes positioned on lines each connecting a rotation center of the polygon with an associated one of apexes of the polygon. In addition to these (four) holes 42c, the base material 42 includes the hole 42b at a central portion thereof constituting the rotation center thereof, and this hole 42b is a through hole in which the polygonal mirror seat (or the rotation shaft) is engageable.

As shown in parts (a) and (b) of Figure 16, the polygonal mirror 40 has a constitution including the molded member 41 which includes a bottom 45 which is a first surface, reflecting surfaces 44A - 44D which are side surfaces, and a top surface 43 covering at least a part of the top surface of the base material 42. The top surface 43 of the molded member 41 is a second surface (positioned on a side opposite from the first surface) covering at least the part of the top surface 42a of the base material 42. In this case, similarly as in the above-described embodiments, gate traces 46A - 46D of the top surface 43 which is the second surface of the molded member 41 are provided at positions which do not overlap with weld lines. Incidentally, the polygonal mirror shown in part (a) of Figure 16 and the polygonal mirror shown in part (b) of Figure 16 are of types different in range in which the molded member covers the part of the base material on the top surface side.

Incidentally, part (c) of Figure 16 shows the polygonal mirror 40 on the bottom side. On the bottom side of the polygonal mirror 40, portions other than the holes 42b and 42c of the base material 42 made of the metal material are covered with the molded member 41 made of the resin material. On the bottom 45 which is the first surface of the molded member 41, bearing surfaces 47A - 47D are provided at positions which do not overlap with weld lines. In this way, the polygonal mirror having a constitution in which the outside of the base material made of the metal material is covered with the molded member made of the resin material may also be provided.

In the above-described embodiments, as the process cartridge mountable in and dismountable from the image forming apparatus, the process cartridge integrally including the photosensitive drum, and the charging means, the developing means and the cleaning means which are the process means actable on the photosensitive drum was described as an example. However, the present invention is not limited thereto. For example, the process cartridge may also be a process cartridge integrally including, in addition to the photosensitive drum, either one of the charging means, the developing means, the cleaning means.

Further, in the above-described embodiments, the constitution in which the process cartridge including the photosensitive drum is mountable in and dismountable from the image forming apparatus was described as an example, but the present invention is not limited thereto. For example, it is also possible to provide an image forming apparatus in which respective constituent elements are incorporated or an image forming apparatus in which each of the respective constituent elements is mountable in and dismountable from the image forming apparatus.

Further, in the above-described embodiments, as the image forming apparatus, the printer was described as an example, but the present invention is not limited thereto. For example, the image forming apparatus may also be other image forming apparatuses such as a copying machine, a facsimile machine and a multi-function machine having functions of these machines in combination. Further, as the image forming apparatus, the image forming apparatus for forming a monochromatic image was described, but the present invention is not limited thereto. For example, the image forming apparatus may also be an image forming apparatus for forming a color image. By applying the present invention to the optical scanning apparatus, the deflector and the polygonal mirror which are usable in the above-described image forming apparatuses, similar effects can be achieved.

According to the present invention, it is possible to reduce a degree of deformation of the polygonal mirror due to the high-speed rotation of the polygonal mirror and the temperature rise at the periphery of the polygonal mirror.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A polygonal mirror includes a reflecting surface capable of reflecting laser light emitted from a light source, a base material made of a metal material, and a molded member molded outside the base material and including a first surface and a second surface which crosses the first surface and which corresponds to the reflecting surface.

## Claims

1. A polygonal mirror comprising:
a reflecting surface capable of reflecting laser light emitted from a light source;
a base material made of a metal material; and
a molded member molded outside said base material and including a first surface and a second surface which crosses said first surface and which corresponds to said reflecting surface.

2. A polygonal mirror according to Claim 1, wherein said molded member includes a third surface crossing said second surface and provided on a side opposite from said first surface.

3. A polygonal mirror according to Claim 1, wherein said molded member includes said first surface provided outside one surface of said base material and includes said second surface provided outside a crossing surface crossing said one surface of said base material.

4. A polygonal mirror according to Claim 2, wherein said molded member includes said first surface provided outside one surface of said base material and includes said second surface provided outside a crossing surface crossing said one surface of said base material, and further includes said third surface provided outside at least a part of the other surface of said base material opposite from said one surface of said base material.

5. A polygonal mirror according to Claim 1, further comprising a metal layer on said second surface.

6. A polygonal mirror according to Claim 5, further comprising a protective layer provided on said metal layer and configured to protect said metal layer.

7. A polygonal mirror according to Claim 1, wherein a thickness of said base material from said one surface to said the other surface is in a range from 1.0 mm to 2.0 mm, and a thickness of said molded member from a surface outside said base material to a surface outside said molded member is in a range from 0.1 mm to 2.0 mm.

8. A deflector comprising:
a polygonal mirror according to Claim 1,
wherein a light flux emitted from said light source is subjected to deflection scanning by said reflecting surface of said polygonal mirror through rotation of said polygonal mirror.

9. An optical scanning apparatus comprising:
a light source; and
a deflector according to Claim 8,
wherein the light flux emitted from said light source is subjected to deflection scanning on an image bearing member by said deflector.

10. An image forming apparatus comprising:
an optical scanning apparatus according to Claim 9,
wherein the image bearing member is scanned with the light flux by said optical scanning apparatus, and an image is formed on a recording material on the basis of an image formed by scanning.

11. A manufacturing method of a polygonal mirror, comprising:
a step in which a metal plate is placed in a metal mold and a resin material is injected into the metal mold thereby to form a resin layer outside the metal plate.

12. A manufacturing method of a polygonal mirror using a metal mold including,
a first mold including a first molding surface for molding a first surface of a molded member outside one surface of a base material and including a gate for permitting injection of a resin material into a molding space for the molded member, and
a second mold including a contact surface contacting the other surface of the base material on a side opposite from the one surface of the base material and including a plurality of second molding surfaces for molding a plurality of second surfaces, crossing the first surface of the molded member, outside the base material, said manufacturing method comprising:
a step of fixing the base material to the second mold by bringing the other surface of the base material into contact with the contact surface of the second mold; and
a step of forming the molded member including the first surface and the second surfaces outside the base material by injecting the resin material through the gate into a space formed outside the base material fixed to the second mold by closing the first mold and the second mold to which the base material is fixed.

13. A manufacturing method of a polygonal mirror using a metal mold including,
a first mold including a first molding surface for molding a first surface of a molded member outside one surface of a base material and including a plurality of second molding surfaces for molding a plurality of second surfaces, crossing the first surface of the molded member, outside the base material, and
a second mold including a contact surface contacting the other surface of the base material on a side opposite from the one surface of the base material, a third molding surface for molding a third surface of the molded member on a side opposite from the first surface in a region in which the third molding surface is in non-contact with the contact surface outside the other surface of the base material, and a gate for permitting injection of a resin material into a molding space for the molded member, said manufacturing method comprising:
a step of fixing the base material to the second mold by bringing the other surface of the base material into contact with the contact surface of the second mold; and
a step of forming the molded member including the first surface, the second surface and the third surface outside the base material by injecting the resin material through the gate into the molding space positioned outside the base material fixed to the second mold by closing the first mold and the second mold to which the base material is fixed.
